(19) Europäisches Patentamt
European Patent Office
Office européen des brevets

(11) **EP 2 500 463 B1**

(12) **EUROPEAN PATENT SPECIFICATION**

(45) Date of publication and mention
of the grant of the patent:
**10.10.2018 Bulletin 2018/41**

(21) Application number: **10828199.9**

(22) Date of filing: **22.10.2010**

(51) Int Cl.:
*D06M 13/184* (2006.01)     *D06P 5/00* (2006.01)
*D06P 5/30* (2006.01)       *C09D 11/00* (2014.01)
*D06P 1/651* (2006.01)      *D06M 13/207* (2006.01)
*C09D 11/322* (2014.01)     *D06M 13/192* (2006.01)
*D06P 1/653* (2006.01)

(86) International application number:
**PCT/JP2010/068716**

(87) International publication number:
**WO 2011/055639 (12.05.2011 Gazette 2011/19)**

(54) **METHOD FOR PRODUCING FABRIC FOR TEXTILE PRINTING, TEXTILE PRINTING METHOD, AND PROCESSING SOLUTION**

VERFAHREN ZUR HERSTELLUNG EINER FASER FÜR TEXTILDRUCK, TEXTILDRUCKVERFAHREN UND VERARBEITUNGSLÖSUNG

PROCÉDÉ DE FABRICATION D'UN TISSU POUR IMPRESSION TEXTILE, PROCÉDÉ D'IMPRESSION TEXTILE, ET SOLUTION DE TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2009 JP 2009256098**

(43) Date of publication of application:
**19.09.2012 Bulletin 2012/38**

(73) Proprietor: **Mimaki Engineering Co., Ltd.**
**Tomi-shi, Nagano 389-0512 (JP)**

(72) Inventors:
• **YAMADA Ryuji**
**Tomi-shi**
**Nagano 389-0512 (JP)**
• **MINEMURA Akira**
**Tomi-shi**
**Nagano 389-0512 (JP)**
• **KOBAYASHI Takaaki**
**Tomi-shi**
**Nagano 389-0512 (JP)**

(74) Representative: **Uchida, Kenji et al**
**Fédit-Loriot**
**38, avenue Hoche**
**75008 Paris (FR)**

(56) References cited:
**EP-A1- 1 652 895      GB-A- 2 312 436**
**JP-A- 11 302 987      JP-A- 2000 110 084**
**JP-A- 2003 003 385    US-A- 4 050 892**
**US-A1- 2006 210 719**

## Description

### TECHNICAL FIELD

The present invention relates to a method for producing a fabric for textile printing, a textile printing method, and a processing solution.

### BACKGROUND ART

Examples of conventional dyeing methods for fabrics include inkjet textile printing employing inkjet printing without plate making. The inkjet textile printing has such a problem that ink for inkjet printing has low viscosity and thus the ink applied to a fabric bleeds to interfere with the formation of sharp images.

In order to solve such a problem, a method of pretreating a fabric for preventing ink bleeding has been known. For example, Patent Document JP-A-61-55277 discloses a method for preventing ink bleeding by impregnating a cloth material with a water soluble polymer, a water soluble salt, or water insoluble inorganic particles in a predetermined amount.

### Related Art Document

### Patent Document

Furthermore, Patent Document EP 1652 895A discloses an ink comprising a surfactant. However, it is difficult to control the degree of impregnation of the ink on the fabric with such a system.

### SUMMARY OF THE INVENTION

### Problem to be Solved by the Invention

However, the method disclosed in Patent Document JP-A-61-55277 fails to sufficiently prevent ink bleeding, leading to a demand for means for further preventing bleeding.

In view of the above-described problems, it is an object of the present invention to provide a method for producing a fabric for textile printing having excellent prevention performance of ink bleeding, a textile printing method using the fabric for textile printing, and a processing solution capable of performing the methods.

### Means for Solving the Problems

According to an aspect of the invention, the present invention provides a method for before textile printing, the method comprising, in the following order :

- impregnating a fabric to be processed with a processing solution containing an organic acid having two or more carboxy groups in an amount of 0.1 to 0.7% by mass based on a total amount of the processing solution, 1 to 4.5 % by mass based on a total amount of the processing solution of a surfactant including acetylene alcohols or an antifoaming agent and a solvent; and
- removing the solvent from the fabric impregnated with the processing solution; said removing the solvent further comprising, in the following order:

  - squeezing the solvent for removal; and
  - volatilizing the solvent for removal by air drying the fabric to be processed and by heating the fabric to be processed after the air drying.

The method for producing a fabric for textile printing of the present invention ensures the production of a fabric for textile printing having excellent prevention performance of ink bleeding. The fabric for textile printing subjected to textile printing can thus form sharp images.

The method for producing a fabric for textile printing of the present invention preferably further includes heat pressing the fabric after the removing of the solvent. A fabric for textile printing that is produced by the production method including the heat pressing has more excellent prevention performance of ink bleeding, and thus can be suitably used as a fabric for textile printing for forming a sharper image.

In the method for producing a fabric for textile printing of the present invention, the organic acid preferably further has a hydroxy group. The use of the organic acid having a hydroxy group and two or more carboxy groups as the organic acid improves dispersibility and/or solubility of the organic acid into the solvent, and is thus unlikely to cause nonuniformity in the ink bleeding prevention. This production method thus ensures the production of a fabric for textile printing with uniform ink bleeding prevention performance.

In the method for producing a fabric for textile printing of the present invention, the processing solution preferably contains the organic acid in an amount of 0.1 to 0.7% by mass based on the total amount of the processing solution. This production method further ensures the prevention of ink bleeding and ensures the production of a fabric for textile printing having excellent storage stability.

The present invention also provides a textile printing method including: applying an ink containing a color material and a polymer dispersant to a fabric for textile printing produced by the above-described method for producing a fabric for textile printing. The ink contains the polymer dispersant in an amount of 10 to 150 parts by mass based on 100 parts by mass of the color material in the ink. This textile printing method ensures the formation of sharp images on a fabric for textile printing.

The present invention further provides a processing solution for use in the above-described method for producing a fabric for textile printing. The processing solution includes the above-described organic acid having two or more carboxy groups and the above-described solvent. This processing solution is brought into contact with a fabric to be processed to produce a fabric for textile printing having excellent prevention performance of ink bleeding.

Effects of the Invention

The present invention provides a method for producing a fabric for textile printing having excellent prevention performance of ink bleeding, a textile printing method using the fabric for textile printing, and a processing solution capable of performing the methods.

MODES FOR CARRYING OUT THE INVENTION

Preferred embodiments of a method for producing a fabric for textile printing, a textile printing method, and a processing solution of the present invention will be described.

Method for Producing Fabric for Textile Printing

A method for producing a fabric for textile printing of an embodiment includes impregnating a fabric to be processed with a processing solution containing an organic acid having two or more carboxy groups and a solvent and removing the solvent from the fabric impregnated with the processing solution.

Impregnation

Examples of the fabric to be processed includes fabrics stainable with a disperse dye, such as a fabric composed of, for example, polyester, polyester/cotton, acetate, or nylon. The fabric to be processed may have any shape such as a woven fabric, a knit, and a nonwoven fabric made from the types of fibers mentioned above. A thread constituting such a fabric preferably has a thickness ranging from 50 to 150 d.

In the present embodiment, the fabric to be processed is preferably made from the polyester fiber. Examples of the polyester fiber include a fiber having a repeating unit such as ethylene terephthalate, trimethylene terephthalate, and butylene terephthalate and a modified polyester fiber produced by copolymerization of a copolymerizable component having a functional group that reacts to a certain dye.

The processing solution contains an organic acid having two or more carboxy groups and a solvent. Examples of the organic acid having two or more carboxy groups include oxalic acid, malonic acid, maleic acid, fumaric acid, malic acid, tartaric acid, succinic acid, glutaric acid, adipic acid, pimelic acid, suberic acid, azelaic acid, sebacic acid, phthalic acid, isophthalic acid, terephthalic acid, citric acid, isocitric acid, tricarballylic acid, aconitic acid, and camphoronic acid.

The organic acid is preferably an organic acid having a hydroxy group and two or more carboxy groups because such an organic acid has excellent solubility to a polar solvent, especially to water.

Among these organic acids, an organic acid having three to five carboxy groups is preferred, an organic acid having three carboxy groups is more preferred, and citric acid is even more preferred, which causes the fabric for textile printing to achieve better prevention performance of ink bleeding. When citric acid is used as the organic acid, the method for producing a fabric for textile printing of the present embodiment can be performed safely and inexpensively, and a fabric for textile printing that more reliably prevents ink bleeding can be produced.

The solvent is preferably a polar solvent such as water and alcohols and is preferably a solvent having a boiling point of 100°C or less because such a solvent can be easily removed in removal. Examples of the alcohols include methanol, ethanol, and isopropyl alcohol. Among these solvents, water is most preferred because, for example, water causes the processing solution to achieve excellent handleability, poisonous volatile components are unlikely to be generated in the removal or heat pressing described later, and no equipment such as a draft chamber is required. A mixed solvent of water and the above-mentioned alcohols may be suitably used.

The processing solution contains the organic acid having two or more carboxy groups in an amount of 0.1 to 0.7% by mass and preferably 0.2 to 0.6% by mass based on the total amount of the processing solution. The processing solution containing the organic acid in an amount of the lower limits or more can lead to the production of a fabric for textile printing having more excellent prevention performance of ink bleeding. The processing solution containing the organic acid in an amount of the upper limits or less can prevent deterioration of the fabric for textile printing such as yellowing and can improve storage stability of the fabric for textile printing.

The processing solution preferably contains the solvent in an amount of 70% by mass or more, more preferably 90% by mass or more, and even more preferably 95% by mass or more, based on the total amount of the processing solution. The processing solution containing the solvent within these ranges can reliably prevent impaired texture of the fabric to be processed and the yellowing of the fabric.

The processing solution preferably has a pH of 1 to 4 and more preferably 2 to 3. The processing solution having a pH less than these ranges may cause corrosion of various apparatuses used in, for example, impregnation, removal, heat pressing, and a textile printing method described later or may cause damage to the fabric to be processed. The processing solution having a pH larger than these ranges may reduce the bleeding prevention performance.

Examples of the method for impregnating the fabric to be processed with the processing solution include padding and single spreading.

The processing solution may contain other components in addition to the organic acid and the solvent. For example, the processing solution may contain a sizing agent and a surfactant.

One of the characteristics required for the fabric for textile printing is good strike-through. However, the good strike-through performance and the excellent bleeding prevention performance are commonly mutually incompatible and it is difficult to satisfy the both. In the impregnation of the present embodiment, the combination use of the organic acid and a particular surfactant in the processing solution can satisfy both fine strike-through performance and fine bleeding prevention performance.

Examples of the surfactant include acetylene alcohols in order to satisfy both fine strike-through performance and fine bleeding prevention performance.

Examples of the acetylene alcohols include 3-methyl-1-butyn-3-ol, 3-methyl-1-pentyn-3-ol, 3,5-dimethyl-1-hexyn-3-ol, 2,5-dimethyl-3-hexyne-2,5-diol, 3,6-dimethyl-4-octyne-3,6-diol, and 2,4,7,9-tetramethyl-5-decyne-4,7-diol. Their ethylene oxide adducts, polyethylene oxide adducts, and the like may also be used. Usable examples of the acetylene alcohols include Surfynol 465 and Surfynol 485, both of which are trade names and manufactured by Nissin Chemical Industry Co., Ltd.

The processing solution contains the surfactant in an amount of 1 to 4.5% by mass, based on the total amount of the processing solution. The processing solution containing the surfactant within these ranges can satisfy further fine strike-through performance and further fine bleeding prevention performance.

An antifoaming agent may be used in place of the surfactant in order to satisfy both fine strike-through performance and fine bleeding prevention performance. The processing solution contains the antifoaming agent in an amount of 1 to 4.5% by mass, based on the total amount of the processing solution. The processing solution containing the antifoaming agent within these ranges can satisfy both further fine strike-through performance and further fine bleeding prevention performance.

Examples of the antifoaming agent include an antifoaming agent containing foam-breaking polysiloxane, hydrophobic particles, and polyglycol. For example, BYK-028 (trade name, manufactured by BYK Japan KK) may be used.

Removal

In the removal, from the fabric to be processed impregnated with the processing solution, the solvent is removed. Examples of the removal method include a squeezing method using a mangle, a drying method by hanging the fabric to be processed, and a heating and drying method by heat pressing, heated roll drying, or the like. Two or more of these methods may be combined. The expression "removal of the solvent" means that at least some of the solvent impregnated into a fabric to be processed is removed and all the solvent is not necessarily removed.

From the fabric to be processed that is impregnated with the processing solution by padding, coating, or the like, the solvent is preferably squeezed using a mangle or the like. After the squeezing, the impregnation rate of the processing solution in the fabric can be appropriately designed depending on the content of the organic acid in the processing solution, the thickness of the fabric, the thickness of fibers in the fabric, a woven texture, and other parameters. The fabric having an excessively small impregnation rate of the processing solution may cause nonuniform adhesion of the processing solution, resulting in ununiform bleeding prevention. The fabric having an excessively large impregnation rate of the processing solution is likely to cause dispersion of the processing solution, and thus various apparatuses used in the heat pressing described later and the like are likely to be polluted, and the fabric after the squeezing is likely to have poor handleability. From the viewpoint of these disadvantages, the impregnation rate of the processing solution is preferably 20 to 150% and more preferably 40 to 120%. Here, the impregnation rate (%) of the processing solution is calculated in accordance with the following formula:

$$\text{Impregnation rate (\%) of the processing solution} = \{\text{Weight of the processing solution adhering to the fabric to be processed}) / (\text{Weight of the fabric to be processed without the processing solution})\} \times 100$$

From the fabric to be processed after the squeezing, the solvent is volatilized for removal. Examples of the method for volatizing the solvent include an air drying method by hanging the fabric to be processed after the squeezing and a heating and drying method by, for example, heat pressing, such as iron pressing, and heated roll drying.

The removal preferably includes squeezing the solvent for removal using a mangle or the like and volatilizing the solvent for removal. When the removal includes the squeezing and the volatilization, the processing solution that is excessively impregnated is removed in the squeezing to accelerate the removal. The solvent is volatilized for removal in the volatilization to prevent the removal of the organic acid together with the solvent, and the organic acid can uniformly and sufficiently adhere to the fabric.

In the volatilization, the fabric to be processed after the squeezing is air dried and then heated and dried with a heated roll or the like. In such volatilization, the removal of the solvent by air drying without heat can suppress deterioration of the fabric, alteration of a component derived from the processing solution, and the like. The solvent can be thoroughly removed through the heating and drying, whereby the organic acid can be fixed into the fabric.

The removal may further include heat pressing described later. The heat pressing described later may be carried out as a part of the removal or may be carried out as another step in addition to the removal.

Heat Pressing

The method for producing a fabric for textile printing of the present embodiment preferably includes performing heat pressing such as iron pressing. The heat pressing may be carried out as a part of the removal described above or may be carried out as another step in addition to the removal.

In the heat pressing, the solvent in the processing solution is further removed and the organic acid is sufficiently fixed into the fabric. Consequently, the fabric for textile printing produced by the production method including the heat pressing achieves further improved prevention performance of ink bleeding as well as having excellent handleability and storage stability.

In the heat pressing, heat pressing is preferably carried out at 60 to 150°C.

Thus, a fabric for textile printing achieving the prevention performance of ink bleeding is produced. The fabric for textile printing produced by the production method of the present embodiment has been impregnated with the processing solution containing the organic acid having two or more carboxy groups and the solvent in the impregnation and the solvent has been removed in the removal. Fibers in the fabric for textile printing are thus impregnated with the organic acid. While the exact reason for the prevention performance of ink bleeding achieved by the fabric for textile printing produced by this production method has yet to be proven, it is supposed that an ink applied to the fabric for textile printing is brought into contact with the organic acid, then a disperse dye or a polymer dispersant contained in the ink is aggregated to suppress spread of the ink into clearance or the like in the fibers of the fabric for textile printing, whereby bleeding is prevented.

In the fabric for textile printing produced by the production method of the present embodiment, the solvent is removed in the removal and thus the fabric has excellent handleability such as portability. The fabric is therefore not necessarily produced immediately before textile printing and may be previously produced and stored and then subjected to textile printing as necessary.

Textile Printing Method

A textile printing method of the present embodiment includes applying an ink to the fabric for textile printing produced by the above-described method for producing a fabric for textile printing. This textile printing method uses the fabric for textile printing produced by the method for producing a fabric for textile printing and thus is unlikely to cause ink bleeding to form sharp images.

Examples of the textile printing method include inkjet textile printing for applying an ink by inkjet printing, screen textile printing, and roller textile printing. Among them, inkjet textile printing is preferred because it does not require plate making and can produce various types of products promptly.

Conventional inkjet textile printing frequently causes ink bleeding because an ink used in inkjet printing has low viscosity. By contrast, the textile printing method of the present embodiment is unlikely to cause bleeding and can form sharp images even when an ink having low viscosity is used because the fabric for textile printing is used.

Examples of the inkjet textile printing method may include thermal, continuous, and piezoelectric inkjet printing methods.

For the ink used in the textile printing method of the present embodiment, an ink containing a disperse dye, a reactive dye, an acid dye, and the like as a color material may be used.

Examples of the disperse dye include C. I. Disperse Yellow: 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, and 232; C. I. Disperse Orange: 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, and 142; C. I. Disperse Red: 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, and 328; C. I. Disperse Violet: 1, 4, 8, 23, 26, 27, 28, 31, 33, 35, 36, 38, 40, 43, 46, 48, 50, 51, 52, 56, 57, 59, 61, 63, 69, and 77; C. I. Disperse Green: 9; C. I. Disperse Brown: 1, 2, 4, 9, 13, and 19; C. I. Disperse Blue: 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, and 359; and C. I. Disperse Black: 1, 3, 10, and 24.

The ink used in the textile printing method of the present embodiment is preferably an ink containing the color material and a polymer dispersant. The ink preferably contains the polymer dispersant in an amount of 10 to 150 parts by mass based on 100 parts by mass of the color material in the ink. The thus produced ink is likely to provide remarkable effect of the bleeding prevention performance by the fabric for textile printing produced by the production method of the present embodiment.

When an ink containing the polymer dispersant within the range is used as the ink, the fabric for textile printing is preferably a fabric for textile printing that is produced by the production method using citric acid as the organic acid. This fabric for textile printing has extremely excellent bleeding prevention performance to an ink containing the polymer dispersant within the range. Consequently, the textile printing method of the present embodiment employing the fabric for textile printing and the ink in combination causes less bleeding and can achieve the formation of sharp images.

The polymer dispersant is a dispersant containing a polymer component among dispersants used as dye dispersants or pigment dispersants and examples include dispersants containing polyamide resin, polyurethane resin, polyester resin, or acrylic resin.

Examples of the polymer dispersant include AJISPER PB-821, AJISPER PB822, and AJISPER PB880 (trade names, manufactured by Ajinomoto Fine-Techno Co., Inc), SOLSPERSE 20000, SOLSPERSE 27000, SOLSPERSE 41000, SOLSPERSE 43000, SOLSPERSE 44000, SOLSPERSE 46000, and SOLSPERSE 54000 (trade names, manufactured by Lubrizol Corporation), and DISPERBYK, DISPERBYK-180, DISPERBYK-183, DISPERBYK-184, DISPERBYK-185, DISPERBYK-187, DISPERBYK-190, DISPERBYK-191, DISPERBYK-192, DISPERBYK-193, DISPERBYK-194, DISPERBYK-2010, DISPERBYK-2090, DISPERBYK-2091, DISPERBYK-2095, DISPERBYK-2096, and BYK-154 (trade names, manufactured by BYK Japan KK).

The textile printing method of the present embodiment preferably performs certain after-treatment after the ink is applied to the fabric for textile printing in the applying. When the inkjet textile printing is performed using a disperse dye, examples of the after process include fixing the dye to the fabric for textile printing after the textile printing and washing and removing unfixed dye.

The fixing is exemplified by a fixing operation at high temperature or with steam at high temperature to the fabric for textile printing after the textile printing. More specifically, steaming by steam, baking by dry heat, thermosol, an HT steamer by heating steam, an HP steamer by pressurized steam, or a hot pressing machine may be employed in the fixing, for example. The HT steamer (high temperature steamer) is preferably used at 130 to 140°C for about 30 minutes for treatment, while the hot pressing machine is preferably used at 200°C for about 60 seconds for treatment.

The washing is exemplified by washing the fabric for textile printing after the fixing with water at an ambient temperature. The washing may be performed by reduction cleaning (R. C. washing) of reductively decomposing an unfixed low-molecular weight compound and an unfixed dye for removal. The fabric is dried thereafter.

The textile printing method of the present embodiment can lead to the production of a textile printing product with sharp images having less ink bleeding.

Processing Solution

A processing solution of the present embodiment contains the above-described organic acid having two or more carboxy groups and the above-described solvent. The processing solution can be prepared by mixing, for example, the organic acid, the solvent, and, other components in predetermined amounts as necessary. The processing solution may be prepared immediately before the impregnation in the method for producing a fabric for textile printing or may be previously prepared and stored.

The processing solution of the present embodiment can not only be used in the above-described method for producing a fabric for textile printing but also be impregnated into various types of fabrics in order to prevent bleeding of an ink to be applied to these fabrics.

The preferred embodiments of the present invention have been described but the invention is not limited to the embodiments.

[Examples]

The present invention will now be described in further detail with reference to examples but the invention is not limited to these examples.

Preparation of Processing Solution

Examples 1 to 3 as reference examples

Anhydrous citric acid and water were mixed at the ratios (mass ratios) listed in Table 1 to prepare processing solutions. The pH of each processing solution prepared was determined and is listed in Table 1.

Example 4 as a reference example

Citric acid monohydrate and water were mixed at the ratio in Table 1 to prepare a processing solution. The pH of the processing solution prepared was determined and is listed in Table 1.

Example 5 as a reference example

DL-malic acid and water were mixed at the ratio in Table 1 to prepare a processing solution. The pH of the processing solution prepared was determined and is listed in Table 1.

Comparative Example 1

Glycolic acid and water were mixed at the ratio in Table 1 to prepare a processing solution. The pH of the processing solution prepared was determined and is listed in Table 1.

Comparative Example 2

DL-lactic acid (an aqueous solution containing DL-lactic acid at a rate of 90% by mass was used; the amount of the aqueous solution used is in Table 1) and water were mixed at the ratio in Table 1 to prepare a processing solution. The pH of the processing solution prepared was determined and is listed in Table 1.

[Table 1]

| | Example 1 | Example 2 | Example 3 | Example 4 | Example 5 | Comparative Example 1 | Comparative Example 2 |
|---|---|---|---|---|---|---|---|
| Anhydrous citric acid | 0.2 | 0.4 | 0.6 | - | - | - | - |
| Citric acid monohydrate | - | - | - | 0.6 | - | - | - |
| DL-malic acid | - | - | - | - | 0.6 | - | - |

(continued)

| | Example 1 | Example 2 | Example 3 | Example 4 | Example 5 | Comparative Example 1 | Comparative Example 2 |
|---|---|---|---|---|---|---|---|
| Glycolic acid | - | - | - | - | - | 1 | - |
| DL-lactic acid (90% by mass of aqueous solution) | - | - | - | - | - | - | 0.67 |
| Water | 99.8 | 99.6 | 99.4 | 99.4 | 99.4 | 99 | 99.33 |
| pH | 2.94 | 2.4 | 2.37 | 2.26 | 2.42 | 2.43 | 2.42 |

Production of Fabric for Textile Printing

Example 6 as a reference example

A pongee fabric (hereinafter abbreviated as PET fabric) made from polyester fiber as a fabric to be processed was impregnated with the processing solution of Example 1. Then, using a mangle, the fabric was squeezed to have an impregnation rate of the processing solution of 100%. The squeezed PET fabric was air dried and then subjected to heat pressing with an iron to produce a PET fabric for textile printing. No yellowing was observed in the produced PET fabric for textile printing.

Examples 7 to 10 as reference examples

A PET fabric for textile printing of Example 7 was produced in a similar manner to that in Example 6 except that the processing solution of Example 2 was used in place of the processing solution of Example 1. A PET fabric for textile printing of Example 8 was produced in a similar manner to that in Example 6 except that the processing solution of Example 3 was used in place of the processing solution of Example 1. A PET fabric for textile printing of Example 9 was produced in a similar manner to that in Example 6 except that the processing solution of Example 4 was used in place of the processing solution of Example 1. A PET fabric for textile printing of Example 10 was produced in a similar manner to that in Example 6 except that the processing solution of Example 5 was used in place of the processing solution of Example 1. No yellowing was observed in the PET fabrics for textile printing produced in Examples 7 to 10.

Comparative Examples 3 and 4

A PET fabric for textile printing of Comparative Example 3 was produced in a similar manner to that in Example 6 except that the processing solution of Comparative Example 1 was used in place of the processing solution of Example 1. A PET fabric for textile printing of Comparative Example 4 was produced in a similar manner to that in Example 6 except that the processing solution of Comparative Example 2 was used in place of the processing solution of Example 1. No yellowing was observed in the PET fabrics for textile printing produced in Comparative Examples 2 and 3.

Inkjet Textile Printing

Example 11 as a reference example

To the PET fabric for textile printing of Example 6, an ink was applied in the conditions below while changing the color formulation and printing density. The color formulations were plain colors (K, C, M, and Y: a maximum printing density of 100%), mixtures of two colors (R, B: a maximum printing density of 200%), and a mixture of three colors (CMY: a maximum printing density of 300%). An ink was applied while changing the printing density by 10% every printing mode and every color formulation and the maximum printing density causing no bleeding was visually observed. The observed results (the maximum printing densities causing no bleeding) are listed in Table 2. The ink amounts per unit area when the printing density was designed to 100% are as follows:

$600 \times 450$ dpi: 5.67 $\mu$g/square inch
$600 \times 600$ dpi: 7.56 $\mu$g/square inch
$600 \times 900$ dpi: 11.34 $\mu$g/square inch (1 sqin = 6,4516 $cm^2$)

Inkjet Printing Conditions

Inkjet printer: TX400D-1800 (trade name, manufactured by MIMAKI ENGINEERING CO., LTD.)
Ink: dye sublimation ink Sb200-2 (trade name, manufactured by MIMAKI ENGINEERING CO., LTD.)
Printing mode 1: 600 × 450 dpi, ND, 6-pass, bidirectional, high speed
Printing mode 2: 600 × 600 dpi, ND, 6-pass, bidirectional, high speed
Printing mode 3: 600 × 900 dpi, ND, 6-pass, bidirectional, high speed

Examples 12 to 14 as reference examples

In Example 12, the inkjet textile printing was carried out in a similar manner to that in Example 11 except that the PET fabric for textile printing of Example 8 was used in place of the PET fabric for textile printing of Example 6 for the observation of ink bleeding. In Example 13, the inkjet textile printing was carried out in a similar manner to that in Example 11 except that the PET fabric for textile printing of Example 9 was used in place of the PET fabric for textile printing of Example 6 for the observation of ink bleeding. In Example 14, the inkjet textile printing was carried out in a similar manner to that in Example 11 except that the PET fabric for textile printing of Example 10 was used in place of the PET fabric for textile printing of Example 6 for the observation of ink bleeding. The observation results are listed in Table 2.

Comparative Examples 5 and 6

In Comparative Example 5, the inkjet textile printing was carried out in a similar manner to that in Example 11 except that the PET fabric for textile printing of Comparative Example 3 was used in place of the PET fabric for textile printing of Example 6 for the observation of ink bleeding. In Comparative Example 6, the inkjet textile printing was carried out in a similar manner to that in Example 11 except that the PET fabric for textile printing of Comparative Example 4 was used in place of the PET fabric for textile printing of Example 6 for the observation of ink bleeding. The observation results are listed in Table 2.

[Table 2]

|  | Printing mode | K | C | M | Y | R | B | CMY |
|---|---|---|---|---|---|---|---|---|
| Example 11 | 1 (600 * 450) | 70% | 90% | 90% | - | 180% | 140% | 120% |
| Example 12 | 1 (600 * 450) | 100% | 100% | 100% | 100% | 200% | 160% | 180% |
|  | 2 (600 * 600) | 100% | 100% | 100% | 100% | 200% | 180% | 240% |
|  | 3 (600 * 900) | 90% | 100% | 100% | 100% | 180% | 120% | 120% |
| Example 13 | 1 (600 * 450) | 100% | 100% | 100% | 100% | 200% | 160% | 210% |
|  | 2 (600 * 600) | 100% | 100% | 100% | 100% | 200% | 200% | 240% |
|  | 3 (600 * 900) | 70% | 90% | 100% | 100% | 100% | 80% | 90% |
| Example 14 | 1 (600 * 450) | 100% | 100% | 100% | 100% | 200% | 180% | 210% |
|  | 2 (600 * 600) | 80% | 80% | 100% | 100% | 100% | 160% | 180% |
|  | 3 (600 * 900) | 60% | 60% | 100% | 100% | 140% | 140% | 150% |
| Comparative Example 5 | 1 (600 * 450) | 60% | 70% | 50% | - | 60% | 40% | 60% |
|  | 3 (600 * 900) | 40% | 30% | 20% | - | 20% | 20% | 30% |
| Comparative Example 6 | 1 (600 * 450) | 50% | 100% | 100% | 100% | 120% | 100% | 120% |
|  | 2 (600 * 600) | 70% | 100% | 100% | 100% | 100% | 100% | 90% |
|  | 3 (600 * 900) | 30% | 60% | 40% | 40% | 40% | 60% | 60% |

Example 15

Citric acid, water, and Surfynol 465 (trade name, manufactured by Nissin Chemical Industry Co., Ltd., a polyethylene oxide adduct of 2,4,7,9-tetramethyl-5-decyne-4,7-diol) were mixed in the ratios (mass ratios) listed in Tables 3 and 4 to prepare processing solutions A1 to A9. Then, each of the processing solutions A1 to A9 (A5 to A9 are reference examples) was impregnated into a PET fabric and the fabric was squeezed using a mangle to have an impregnation rate of the processing solution of 100%. The squeezed PET fabric was air dried and then subjected to heat pressing with an iron to prepare a PET fabric for textile printing. No yellowing was observed in the produced PET fabrics for textile printing.

Each PET fabric for textile printing was subjected to inkjet textile printing in a similar inkjet printing condition to the condition (printing mode 2) in Example 11 at printing densities of 100%, 50%, and 25% in every color formulation. Then, the ink was developed with a thermal transfer machine manufactured by HASHIMA under a condition at 200°C for 20 seconds. The fabric after the development was observed to evaluate ink bleeding and strike-through performance. The evaluation results are listed in Tables 3 and 4.

Regarding ink bleeding, the bleeding degree was visually observed when the fabric was printed at a printing density of 100%. For the evaluation of A1 to A9, each bleeding degree was classified into three classes with a fabric having relatively small bleeding being evaluated as "3" and a fabric having relatively large bleeding being evaluated as "1".

The strike-through performance was evaluated on the basis of the reflection density of the back side of the printed side. For the evaluation, each performance was classified into three classes with a fabric having relatively high reflection density (good strike-through performance) being evaluated as "3". The PET fabric for textile printing of Example 6 was subjected to inkjet textile printing in a similar manner and the strike-through performance was evaluated as "1".

[Table 3]

| Processing solution | A1 | A2 | A3 | A4 | A5 |
|---|---|---|---|---|---|
| Water | 97.7 | 96.7 | 95.7 | 96.4 | 93.4 |
| Citric acid | 0.3 | 0.3 | 0.3 | 0.6 | 0.6 |
| Surfynol 465 | 2.0 | 3.0 | 4.0 | 3.0 | 6.0 |
| Bleeding | 3 | 2 | 2 | 2 | 1 |
| Strike-through performance | 2 | 3 | 3 | 3 | 3 |

[Table 4]

| Processing solution | A6 | A7 | A8 | A9 |
|---|---|---|---|---|
| Water | 89.4 | 94.0 | 89.0 | 84.0 |
| Citric acid | 0.6 | 1.0 | 1.0 | 1.0 |
| Surfynol 465 | 10.0 | 5.0 | 10.0 | 15.0 |
| Bleeding | 1 | 1 | 1 | 1 |
| Strike-through performance | 3 | 3 | 3 | 3 |

Example 16

Citric acid, water, BYK-028 (trade name, manufactured by BYK Japan KK; a mixture of foam-breaking polysiloxane, hydrophobic particles, and polyglycol; a nonvolatile content of 98% or more) were mixed in the ratios (mass ratios) listed in Tables 5 and 6 to prepare processing solutions B1 to B10 (B5-B9 are reference examples) . Then, each of the processing solutions B1 to B10 was impregnated into a PET fabric and the fabric was squeezed using a mangle to have an impregnation rate of the processing solution of 100%. The squeezed PET fabric was air dried and then subjected to heat pressing with an iron to prepare a PET fabric for textile printing. No yellowing was observed in the produced PET fabrics for textile printing.

Each PET fabric for textile printing was subjected to inkjet textile printing in a similar inkjet printing condition to the condition (printing mode 2) in Example 11 at printing densities of 100%, 50%, and 25% in every color formulation. Then, the ink was developed with a thermal transfer machine manufactured by HASHIMA under a condition at 200°C for 20 seconds. The fabric after the development was observed to evaluate ink bleeding and strike-through performance in a similar manner to that in Example 15. The evaluation results are listed in Tables 5 and 6.

[Table 5]

| Processing solution | B1 | B2 | B3 | B4 | B5 | B6 |
|---|---|---|---|---|---|---|
| Water | 97.7 | 96.7 | 95.7 | 96.4 | 93.4 | 89.4 |
| Citric acid | 0.3 | 0.3 | 0.3 | 0.6 | 0.6 | 0.6 |
| BYK-028 | 2.0 | 3.0 | 4.0 | 3.0 | 6.0 | 10.0 |
| Bleeding | 3 | 2 | 2 | 2 | 1 | 1 |
| Strike-through performance | 2 | 2 | 2 | 2 | 3 | 3 |

[Table 6]

| Processing solution | B7 | B8 | B9 | B10 |
|---|---|---|---|---|
| Water | 94.0 | 89.0 | 84.0 | 97.4 |
| Citric acid | 1.0 | 1.0 | 1.0 | 0.6 |
| BYK-028 | 5.0 | 10.0 | 15.0 | 2.0 |
| Bleeding | 1 | 1 | 1 | 3 |
| Strike-through performance | 2 | 3 | 3 | 2 |

**Claims**

1. A method for producing a fabric before textile printing, the method comprising, in the following order :

   - impregnating a fabric to be processed with a processing solution containing an organic acid having two or more carboxy groups in an amount of 0.1 to 0.7% by mass based on a total amount of the processing solution, 1 to 4.5 % by mass based on a total amount of the processing solution of a surfactant including acetylene alcohols or an antifoaming agent and a solvent; and
   - removing the solvent from the fabric impregnated with the processing solution; said removing the solvent further comprising, in the following order:

     - squeezing the solvent for removal; and
     - volatilizing the solvent for removal by air drying the fabric to be processed and by heating the fabric to be processed after the air drying.

2. The method for producing a fabric for textile printing according to claim 1, further comprising heat pressing the fabric after the removing of the solvent.

3. The method for producing a fabric for textile printing according to claim 1 or 2, wherein the organic acid further has a hydroxy group.

4. A textile printing method comprising:

   applying an ink containing a color material and a polymer dispersant to a fabric for textile printing produced by the method for producing a fabric for textile printing according to any one of claims 1 to 3, wherein
   the ink contains the polymer dispersant in an amount of 10 to 150 parts by mass based on 100 parts by mass of the color material in the ink.

5. A processing solution for use in the method for producing a fabric for textile printing according to any one of claims 1 to 3, the processing solution comprising:

0.1 to 0.7% by mass, based on a total amount of the processing solution, of the organic acid having two or more carboxy groups;

1 to 4.5 % by mass based on a total amount of the processing solution of a surfactant including acetylene alcohols or an antifoaming agent; and

the solvent.

**Patentansprüche**

1. Verfahren zur Herstellung eines Stoffes für Textildruck, das Verfahren umfassend, in der nachstehenden Reihenfolge:

- Imprägnieren eines zu verarbeitenden Stoffes mit einer Verarbeitungslösung, enthaltend eine organische Säure mit zwei oder mehr Carboxylgruppen in einer Menge von 0,1 bis 0,7 Massen-%, bezogen auf eine Gesamtmenge der Verarbeitungslösung, 1 bis 4,5 Massen-%, bezogen auf eine Gesamtmenge der Verarbeitungslösung, eines Tensids, beinhaltend Acetylenalkohole oder ein Antischaummittel, und ein Lösemittel; und
- Entfernen des Lösemittels von dem Stoff, der mit der Verarbeitungslösung imprägniert ist; das Entfernen des Lösemittels weiter umfassend, in der nachstehenden Reihenfolge:

- Ausdrücken des Lösemittels zur Entfernung; und
- Verflüchtigen des Lösemittels zur Entfernung durch Lufttrocknen des Stoffes zur Verarbeitung und durch Erwärmen des Stoffes zur Verarbeitung nach dem Lufttrocknen.

2. Verfahren zur Herstellung eines Stoffes für Textildruck nach Anspruch 1, weiter umfassend das Heißpressen des Stoffes nach dem Entfernen des Lösemittels.

3. Verfahren zur Herstellung eines Stoffes für Textildruck nach Anspruch 1 oder 2, wobei die organische Säure weiter eine Hydroxylgruppe aufweist.

4. Textildruckverfahren, umfassend:
Aufbringen einer Tinte, die ein Farbmaterial und ein Polymerdispergiermittel enthält, auf einen Stoff für Textildruck, hergestellt durch das Verfahren zum Herstellen eines Stoffes für Textildruck nach einem der Ansprüche 1 bis 3, wobei die Tinte das Polymerdispergiermittel in einer Menge von 10 bis 150 Massenteilen, bezogen auf 100 Massenteile des Farbmaterials in der Tinte, enthält.

5. Verarbeitungslösung zur Verwendung in dem Verfahren zur Herstellung eines Stoffes für Textildruck nach einem der Ansprüche 1 bis 3, wobei die Verarbeitungslösung umfasst:

0,1 bis 0,7 Massen-%, bezogen auf eine Gesamtmenge der Verarbeitungslösung, der organischen Säure mit zwei oder mehr Carboxylgruppen;
1 bis 4,5 Massen-%, bezogen auf eine Gesamtmenge der Verarbeitungslösung, eines Tensids, beinhaltend Acetylenalkohole oder ein Antischaummittel; und
das Lösungsmittel.

**Revendications**

1. Procédé de production d'un tissu avant impression textile, le procédé comprenant, dans l'ordre suivant :

- l'imprégnation d'un tissu à traiter avec une solution de traitement contenant un acide organique ayant deux ou plus de deux groupes carboxy en une quantité de 0,1 à 0,7 % en masse sur la base d'une quantité totale de la solution de traitement, 1 à 4,5 % en masse sur la base d'une quantité totale de la solution de traitement d'un tensioactif comprenant des alcools d'acétylène ou un agent antimousse et un solvant ; et
- l'élimination du solvant à partir du tissu imprégné avec la solution de traitement ; ladite élimination du solvant comprenant en outre, dans l'ordre suivant :
- le pressage du solvant à des fins d'élimination ; et
- la volatilisation du solvant à des fins d'élimination par séchage à l'air du tissu à traiter et par chauffage du tissu à traiter après le séchage à l'air.

**2.** Procédé de production d'un tissu pour impression textile selon la revendication 1, comprenant en outre le pressage à chaud du tissu après l'élimination du solvant.

**3.** Procédé de production d'un tissu pour impression textile selon la revendication 1 ou 2, dans lequel l'acide organique contient en outre un groupe hydroxy.

**4.** Procédé d'impression textile comprenant :

l'application d'une encre contenant une matière colorée et un dispersant polymère sur un tissu pour impression textile produit par le procédé de production d'un tissu pour impression textile selon l'une quelconque des revendications 1 à 3, dans lequel
l'encre contient le dispersant polymère en une quantité de 10 à 150 parties en masse sur la base de 100 parties en masse de la matière colorée dans l'encre.

**5.** Solution de traitement pour son utilisation dans le procédé de production d'un tissu pour impression textile selon l'une quelconque des revendications 1 à 3, la solution de traitement comprenant :

0,1 à 0,7 % en masse, sur la base d'une quantité totale de la solution de traitement, de l'acide organique ayant deux ou plus de deux groupes carboxy ;
1 à 4,5 % en masse sur la base d'une quantité totale de la solution de traitement d'un tensioactif comprenant des alcools d'acétylène ou un agent antimousse ; et
le solvant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61055277 A

- EP 1652895 A